## Europäisches Patentamt

## European Patent Office

## Office européen des brevets

(11) Veröffentlichungsnummer: **0 229 879**
**B1**

(12) **EUROPÄISCHE PATENTSCHRIFT**

(45) Veröffentlichungstag der Patentschrift:
29.08.90

(51) Int. Cl.⁵: **F02D 41/28, F02D 41/34,**
**F02D 41/36, F02P 9/00**

(21) Anmeldenummer: 86113590.3

(22) Anmeldetag: 02.10.86

(54) Verfahren und Schaltungsanordnung zur Ansteuerung von Treiberstufen für Funktionen von Kraftfahrzeug-Verbrennungsmotoren, insbesondere für die Kraftstoffeinspritzung oder Zündung.

(30) Priorität: 27.11.85 DE 3541884

(43) Veröffentlichungstag der Anmeldung:
29.07.87 Patentblatt 87/31

(45) Bekanntmachung des Hinweises auf die Patenterteilung:
29.08.90 Patentblatt 90/35

(84) Benannte Vertragsstaaten:
DE FR GB IT SE

(56) Entgegenhaltungen:
DE-A- 3 312 950
FR-A- 2 227 432
GB-A- 2 055 484
US-A- 4 064 844
US-A- 4 528 960

(73) Patentinhaber: Siemens Aktiengesellschaft,
Wittelsbacherplatz 2, D-8000 München 2(DE)

(72) Erfinder: Bergholz, Ralf, Dr., Jülicher Strasse 32,
D-8500 Nürnberg 90(DE)

**Beschreibung**

Verfahren und Schaltungsanordnung zur Ansteuerung von Treiberstufen für Funktionen von Kraftfahrzeug-Verbrennungsmotoren, insbesondere für die Kraftstoffeinspritzung oder Zündung.

Die Erfindung richtet sich auf ein Verfahren nach dem Oberbegriff von Anspruch 1.

Bei neuzeitlichen Steuerungen bzw. Regelungen für Verbrennungsmotoren, insbesondere in Kraftfahrzeugen ist man zur Erzielung eines optimalen Laufverhaltens bestrebt, die Regelung bzw. Steuerung zylinderselektiv vorzunehmen, d.h. die Ansteuerung bzw. Regelung eines bestimmten Zylinders zwar koordiniert mit den anderen aber individuell korrigierbar vorzunehmen. Den hierdurch offensichtlich erzielbaren Vorteilen steht ein erhöhter Aufwand im Bereich der Schaltungsanordnung gegenüber. Eine bekannte derartige Schaltungsanordnung ist z.B. aus der EP-OS 0 152 287 bekannt.

Betrachtet man z.B. die zylinderselektive Kraftstoffeinspritzung, so ist es hierbei erforderlich, jedes Einspritzventil einzeln in Echtzeit ansteuern zu können. Hierfür werden herkömmlicherweise timerkontrollierte Ausgänge an dem Microcontroller der Schaltungsanordnung benötigt. Solche Ausgänge sind hardwaremäßig mit dem Timer verbunden, so daß ohne Interruptprogramm direkt der Zustand dieser Ausgänge beeinflußt werden kann. Sofern man nun aber auch weitere Funktionen, wie z.B. Zündung und Klopfregelung, von diesem Microcontroller abgeleitet regeln bzw. steuern möchte, werden hierfür ebenfalls solche Ausgänge benötigt. Bei derzeit verfügbaren Microcontrollern stehen derartige Ausgänge aber dann nicht in hinreichender Zahl zur Verfügung und selbst im Hinblick auf zukünftige Entwicklungen führt der Bedarf an solchen Ausgängen doch jedenfalls zu einer Kostenerhöhung.

Ein weiteres Problem vergleichbarer herkömmlicher Schaltungsanordnungen besteht darin, daß diese nicht gleichermaßen für Motoren mit unterschiedlicher Zylinderzahl geeignet sind, so daß eine Anpassung der Basissoftware an die Zylinderzahl und gegebenenfalls auch an die Zündfolge erforderlich ist. Demgegenüber wäre es aus Kostengründen wünschenswert, für unterschiedliche Verbrennungsmotoren mit der gleichen Schaltungsanordnung und Software arbeiten zu können und allenfalls über spezifische Module eine Individualisierung vorzunehmen.

Hiervon ausgehend liegt der Erfindung die Aufgabe zugrunde, eine zylinderselektive Steuerung bzw. Regelung für Verbrennungsmotoren zu ermöglichen, welche sich mit relativ geringen Anforderungen an den einzusetzenden Microcontroller realisieren läßt und für unterschiedliche Typen von Verbrennungsmotoren problemlos einsetzbar ist.

Zur Lösung dieser Aufgabe dient ein Verfahren nach dem kennzeichnenden Teil von Anspruch 1. Ein besonderer Vorteil des erfindungsgemäßen Verfahrens liegt darin, daß auch dann eine zylinderselektive Ansteuerung bzw. Regelung ermöglicht wird, wenn die EIN-Zustände der zu steuernden Funktionen der einzelnen Zylinder sich zeitlich überlappen. Darüber hinaus kann ein entsprechendes Verfahren für Motoren mit beliebiger Zylinderzahl unterhalb einer vorgegebenen maximalen Zylinderzahl, z.B. acht, eingesetzt werden.

Durch die gemäß Anspruch 2 vorgesehene Kodierung der Überlaufleitungen ist eine einfache Individualisierung auf einen Verbrennungsmotor mit einer bestimmten Zylinderzahl hin möglich, ohne daß grundsätzlich Eingriffe in die Schaltung oder Software erforderlich werden.

Anspruch 3 gibt eine besonders einfache Möglichkeit der Kodierung an. Die Kodierungsmöglichkeit gemäß Anspruch 4 ist besonders elegant. Die Kodierung kann dabei entweder durch einen Hardware-Kodierschalter oder aber unmittelbar durch den Microcontroller softwaremäßig vorgenommen werden, so daß auch eine selbst-adaptive Lösung möglich ist.

Die Maßnahmen gemäß Anspruch 5 ermöglichen es, ohne einen Eingriff in die Hardware oder Software lediglich durch entsprechende Konfektion des Kabelbaums durch den Kraftfahrzeughersteller eine Anpassung an die jeweilige Zündfolge vorzunehmen.

Die Ausgestaltung nach Anspruch 6 gestattet es, von einer zylinderselektiven Ansteuerung auf Parallelbetrieb der einzelnen Zylinder umzuschalten. Dies ist von Bedeutung in der Startphase, bis z. B. von einem Geber ein Signal zur Identifizierung eines Zylinders zur Koordinierung der zylinderselektiven Ansteuerung vorliegt, um ein zumindest ausreichendes Laufverhalten des Motors zu ermöglichen.

Die Schaltungsanordnung nach Anspruch 7 zeichnet sich dadurch aus, daß sie lediglich zwei timerkontrollierte Ausgänge des Microcontrollers benötigt, so daß weitere entsprechende Ausgänge für die Steuerung anderer Funktionen zur Verfügung steht.

Die gemäß Anspruch 8 vorgesehenen Schalteinrichtungen können beim Einsetzen in die Steuerschaltung für einen bestimmten Verbrennungsmotor betätigt werden, um eine Anpassung an die Zylinderzahl des Verbrennungsmotors herbeizuführen. Die Schalteinrichtungen können beispielsweise hardwaremäßig durch Lötbrücken, Kodierschalter und dgl. realisiert werden. Alternativ hierzu ist auch eine adaptive Lösung möglich, indem I/o-Ports des Microcontrollers zur Schaltung der Überlaufleitungen herangezogen werden.

Anspruch 9 gibt eine Ausgestaltung der Schaltungsanordnung an, wie sie insbesondere bei Vorgabe einer maximalen Zylinderzahl von acht Zylindern vorteilhaft realisiert werden kann.

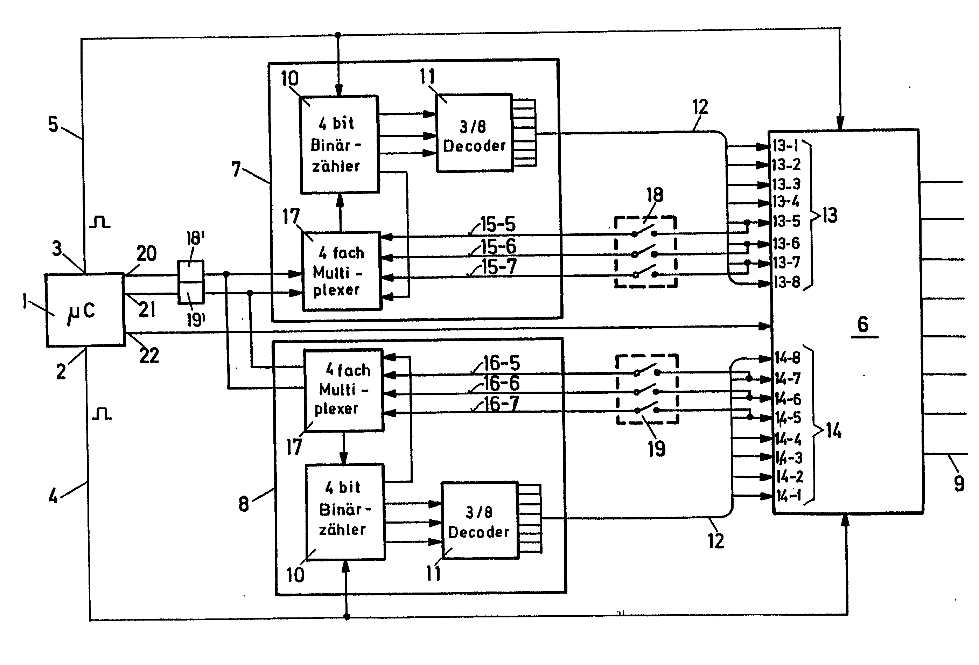

Weitere Merkmale, Vorteile der Erfindung ergeben sich aus der folgenden Beschreibung einer bevorzugten Ausführungsform anhand der Zeichnung. Diese zeigt ein Blockschaltbild der Schaltungsanordnung.

Ein Microcontroller 1 besitzt timerkontrollierte Ausgänge 2 und 3. Bei einem Einsatz der erfindungsgemäßen Schaltungsanordnung zur zylinderselektiven Steuerung der Kraftstoff-Einspritzzeitpunkte und -dauer werden die Ausgangssignale an den Ausgängen 2 und 3 als Signale für das Öffnen bzw. Schließen der Einspritzventile herangezogen.

Den Ausgängen 2 bzw. 3 über Leitungen 4 bzw. 5 nachgeordnet ist einerseits ein Ausgangsspeicher 6 sowie je ein Adressenzähler 7 bzw. 8 für die Öffnungsadressen bzw. Schließadressen des Ausgangsspeichers 6.

Der Ausgangsspeicher 6 weist Ausgänge 9 auf, welche mit den Treiberstufen für die Einspritzventile der einzelnen Zylinder verbunden sind. Bei einer Auslegung der Schaltungsanordnung für Verbrennungsmotoren mit maximal acht Zylindern sind dementsprechend acht derartige Ausgänge erforderlich.

Jeder Adressenzähler 7 bzw. 8 umfaßt einen 4 Bit Binärzähler 10, welchem ein 3/8-Decoder 11 nachgeordnet ist, dessen Ausgänge über Leitungen 12 mit den Öffnungs- bzw. Schließ-Adressen 13 bzw. 14 verbunden sind.

Bei der in der Zeichnung dargestellten Ausführungsform der Schaltungsanordnung für Verbrennungsmotoren von vier bis acht Zylindern führt von den Öffnungsadressen 13-5 bis 13-7 und von den Schließadressen 14-5 bis 14-7 je eine Überlaufleitung 15-5, 15-6, 15-7 bzw. 16-5, 16-6, 16-7 jeweils zu den Eingängen eines Vierfach-Multiplexers 17, dessen Ausgang jeweils mit den 4 Bit Binärzählern 10 verbunden ist.

In den Überlaufleitungen 15 bzw. 16 sind Schalteinrichtungen 18 bzw. 19 angeordnet. Diese Schalteinrichtungen sind beispielsweise als Lötbrücken ausgebildet und ermöglichen es, die Schaltungsanordnung für den Einsatz Z in Verbindung mit einem Verbrennungsmotor mit bestimmter Zylinderzahl anzupassen. So wird z.B. bei einem beabsichtigten Einsatz für einen Verbrennungsmotor mit vier Zylindern die Überlaufleitung 15-5 bzw. 16-5 durch Betätigung der Schalteinrichtungen 18 bzw. 19, z.B. durch Herstellung einer Lötbrücke, aktiviert. Bei dieser Ausführungsform werden die Multiplexer 17 nicht benötigt.

Alternativ hierzu ist es möglich, Ausgänge 20, 21 des Microcontrollers 1, welche mit den Vierfach-Multiplexern 17 der Adressenzähler 7 bzw. 8 verbunden sind, adaptiv zu aktivieren, d.h. vom Mikroprozessor wird ein Zylinderzahl-Kennungssignal ausgegeben. Der Ausgang 22 des Microcontrollers 1 ist mit dem Ausgangsspeicher 6 verbunden, um in der Startphase einen Parallelbetrieb aller Zylinder zu ermöglichen.

Eine weitere Möglichkeit einer hardwaremäßigen Kodierung besteht in dem Vorsehen von Kodier-Schalteinrichtung 18', 19' nach den Ausgängen 20, 21 des Microcontrollers 1.

Für die Funktion der erfindungsgemäßen Schaltungsanordnung werden also, wie sich aus der vorstehenden Beschreibung ergibt, lediglich zwei timerkontrollierte Ausgänge 2, 3 des Microcontrollers 1 benötigt. Welches Ventil zu öffnen bzw. zu schließen ist, wird über die Adressenzähler 7 bzw. 8 bestimmt, durch welche die Öffnungs- bzw. Schließadressen 13 bzw. 14 des Ausgangsspeichers 6 adressiert werden. Dabei wird mit der ansteigenden Flanke des Schließ- bzw. Öffnungssignals der Inhalt des Ausgangsspeichers 6 geändert, während mit dessen fallender Flanke der Adressenzähler 7 bzw. 8 weitergezählt wird. Das "RESET" des Zählers 10 wird durch die jeweils aktivierte Überlaufleitung 15 bzw. 16 bewerkstelligt.

Die Adressenzähler 7 bzw. 8 für Öffnen bzw. Schließen arbeiten unabhängig voneinander, d.h. es können sich beliebige Öffnungszeitüberlappungen ergeben. Bei einem Einsatz der erfindungsgemäßen Schaltungsanordnung zum Steuern der Zündung können sich entsprechend beliebige Schließwinkelüberlappungen ergeben. Weiterhin können unterschiedliche Ausgangsspeicher-Adressen 13 bzw. 14 gleichzeitig zum Öffnen und Schließen angesprochen werden, so daß Kraftstoff-Zumessungsfehler, wie sie bisher bei einer Problemlösung mit Interruptroutinen auftraten, vermieden werden.

Beim Parallelbetrieb in der Startphase werden jeweils sämtliche Ausgangsspeicherzellen gesetzt und bei jedem Schließsignal gelöscht.

Der Anschluß der Treiberstufen für die einzelnen Zylinder kann entsprechend der vorgegebenen Zündfolge durch entsprechende Konfektionierung des Kabelbaums vorgenommen werden, ohne daß die Schaltungsanordnung als solche auf die Zündfolge hin angepaßt werden müßte.

Ein Vorteil der Schaltungsanordnung liegt darin, daß ein entsprechendes Modul sich derart austauschen läßt, daß problemlos eine Gruppeneinspritzung mit Hilfe eines RS-Flip-Flop realisiert werden kann.

**Patentansprüche**

1. Verfahren zur Ansteuerung von Treiberstufen für Funktionen von Kraftfahrzeug-Verbrennungsmotoren, insbesondere für die Kraftstoffeinspritzung oder Zündung, umfassend die Verwendung von timerkontrollierten Ausgangssignalen eines Microcontrollers (1) mit mindestens zwei timerkontrollierten Ausgängen zur zylinderselektiven Ansteuerung und zur Vorgabe von Funktionsbeginn und Funktionsende der Ansteuerung und zur Vorgabe von Funktionsbeginn und Funktionsende der Ansteuerung, dadurch gekennzeichnet, daß mit der einen (z. B. ansteigenden) Flanke der Ausgangssignale eines ersten Microcontroller-Ausgangs (3) ein erster Adressenzähler (7) für Funktionsbeginn-Adressen betrieben und durch diesen eine Öffnungsadresse (13-1, 13-8) in einem Ausgangsspeicher (6) adressiert wird, wobei mit der anderen (z. B. fallenden) Flanke der Ausgangssignale des ersten Mikrokontroller-Ausgangs (3) der Ausgangsspeicher (6) auf den Zustand "Funktionsbeginn" geändert wird, und daß mit der einen (z. B. ansteigenden) Flanke der Ausgangssignale eines zweiten Microcontroller-Ausgangs (2) ein zweiter Adressenzähler (8) für Funktionsende-Adressen betrieben und durch diesen eine Schließadresse (14-1, 14-8) in dem Ausgangsspeicher (6) adressiert wird, wobei mit der anderen (z. B. fallenden) Flanke der Ausgangssignale des zweiten Microcontroller-Ausgangs (2) der Ausgangsspeicher (6) auf den Zustand "Funktionsende" geändert wird.

2. Verfahren nach Anspruch 1, dadurch gekennzeichnet, daß Überlaufleitungen (15 bzw. 16) zwischen Ausgangsspeicher (6) und Adressenzähler (7 bzw. 8) entsprechend der Zylinderzahl des zu betreibenden Verbrennungsmotors kodiert werden.

3. Verfahren nach Anspruch 2, dadurch gekennzeichnet, daß die Kodierung über Schalter, Lötbrücken od. dgl. durch Öffnen bzw. Unterbrechen von Überlaufleitungen (15 bzw. 16) erfolgt.

4. Verfahren nach Anspruch 2, dadurch gekennzeichnet, daß die Kodierung über ein Eingangssignal für einen Multiplexer (17) des Adressenzählers (7 bzw. 8) erfolgt.

5. Verfahren nach Anspruch 1, dadurch gekennzeichnet, daß die Ausgänge der dem Ausgangsspeicher (6) nachgeordneten Treiberstufen mit den Funktionselementen der einzelnen Zylinder entsprechend der individuellen Zündfolge des jeweiligen Verbrennungsmotors verbunden werden.

6. Verfahren nach Anspruch 1, dadurch gekennzeichnet, daß der Microcontroller (1) den in der Startphase aktivierten Parallelbetrieb abschalten kann.

7. Verwendung einer Schaltungsanordnung zur Durchführung des Verfahrens nach Anspruch 1 zur Ansteuerung von Treiberstufen für Funktionen von Kraftfahrzeug-Verbrennungsmotoren, insbesondere für die zylinderselektive Kraftstoff-Einspritzung, Zündauslösung od. dgl., umfassend einen Microcontroller mit wenigstens zwei timerkontrollierten Ausgängen, wobei jedem Ausgang (2 bzw. 3) ein Adressenzähler (7 bzw. 8) nachgeordnet ist, den Adressenzählern (7 bzw. 8) und den Ausgängen (2, 2) des Microcontrollers (1) ein Ausgangsspeicher (6) nachgeordnet ist, und wobei zwischen dem Ausgangsspeicher (6) und Eingängen der Adressenzähler (7 bzw. 8) selektiv aktivierbare Überlaufleitungen (15 bzw. 16) vorgesehen sind.

8. Verwendung einer Schaltungsanordnung nach Anspruch 7, wobei in den Überlaufleitungen (15 bzw. 16) Schalteinrichtungen (18 bzw. 19) angeordnet sind.

9. Verwendung einer Schaltungsanordnung nach Anspruch 8, wobei jeder Adressenzähler (7 bzw. 8) einen 4 bit Zähler (10) mit einem diesem nachgeordneten 3/8-Decoder (11) und einen diesem vorgeordneten Vierfach-Multiplexer (17) umfaßt.

## Claims

1. Method for activating driver stages for functions of motor vehicle combustion engines, preferably for the fuel injection or ignition, comprising the use of timercontrolled output signals of a micro controller (1) having at least two timer-controlled outputs for cylinder-selective activation and for specifying function start and function end of the activation and for specifying function start and function end of the activation, characterized in that a first address counter (7) for function start addresses is operated with the one (e.g. rising) edge of the output signals of a first micro controller output (3) and an opening address (13-1, 13-8) in an output memory (6) is addressed by said address counter, the output memory (6) being changed to the state "function start" with the other (e.g. falling) edge of the output signals of the first micro controller output (3), and in that a second address counter (8) for function end addresses is operated with the one (e.g. rising) edge of the output signals of a second micro controller output (2) and a closing address (14-1, 14-8) in the output memory (6) is addressed by said second address counter, the output memory (6) being changed to the state "function end" with the other (e.g. falling) edge of the output signals of the second micro controller output (2).

2. Method according to Claim 1, characterized in that overflow lines (15 or 16) between output memory (6) and output counter (7 or 8) are coded according to the cylinder number of the combustion engine to be operated.

3. Method according to Claim 2, characterized in that the coding occurs via switches, solder straps or the like by opening or interrupting overflow lines (15 or 16).

4. Method according to Claim 2, characterized in that the coding occurs via an input signal for a multiplexer (17) of the address counter (7 or 8).

5. Method according to Claim 1, characterized in that the outputs of the driver stages arranged downstream of the output memory (6) are connected to the function elements of the individual cylinders according to the individual ignition sequence of the respective combustion engine.

6. Method according to Claim 1, characterized in that the micro controller (1) can switch off the parallel operation activated in the start phase.

7. Use of a circuit arrangement for performing the method according to Claim 1 for activating driver stages for functions of motor vehicle combustion engines, preferably for the cylinder-selective fuel injection, triggering of ignition or the like, comprising a micro controller having at least two timer-controlled outputs, an address counter (7 or 8) being connected downstream of each output (2 or 3), an output memory (6) being connected downstream of the address counters (7 or 8) and of the outputs (2, 2) of the micro controller (1), and selectively activatable overflow lines (15 or 16) being provided between the output memory (6) and outputs of the address counters (7 or 8).

8. Use of a circuit arrangement according to Claim 7, switching devices (18 or 19) being arranged in the overflow lines (15 or 16).

9. Use of a circuit arrangement according to Claim 8, each address counter (7 or 8) comprising a four-bit counter (10) having a 3/8 decoder (11) connected downstream of it and a quad multiplexer (17) connected upstream of it.

## Revendications

1. Procédé pour commander des étages d'attaque pour des fonctions de moteurs à combustion interne de véhicules automobiles, notamment pour l'injection du carburant ou l'allumage, incluant l'utilisation de signaux de sortie, commandés par une horloge, d'un microcontrôleur (1) comportant au moins deux sorties commandées par une horloge pour la commande sélective pour chaque cylindre et pour la prédétermination du début et de la fin de fonctions de la commande, caractérisé par le fait qu'un premier compteur d'adresses (7) servant à compter les adresses de débuts de fonctions est commandé par un flanc (par exemple le flanc montant) des signaux d'une première sortie (3) du microcalculateur et qu'une adresse d'ouverture (13-1, 13-8) située dans une mémoire de sortie (6) est adressée par ce compteur, la mémoire de sortie (6) étant amenée dans l'état "début de fonction" au moyen de l'autre flanc (par exemple le flanc retombant) des signaux de la première sortie (3) du microcontrôleur, et qu'un second compteur d'adresses (8) prévu pour des adresses de fins de fonctions est commandé par un flanc (par exemple le flanc montant) des signaux d'une seconde sortie (2) du microcontrôleur et qu'une adresse de fermeture (14-1, 14-8) située dans la mémoire de sortie (6) est adressée par ce compteur, la mémoire de sortie (6) étant amenée dans l'état "fin de fonction" par l'autre flanc (par exemple le flanc retombant) des signaux de la seconde sortie (2) du microcontrôleur.

2. Procédé suivant la revendication 1, caractérisé par le fait que des conducteurs de dépassement de capacité (15 ou 16) situés entre la mémoire de sortie (6) et le compteur d'adresses (7 ou 8) sont codés en fonction du nombre des cylindres du moteur à combustion interne, dont le fonctionnement doit être commandé.

3. Procédé suivant la revendication 2, caractérisé par le fait que le codage est réalisé par l'intermédiaire d'interrupteurs, de cavaliers de soudure ou analogues, au moyen de l'ouverture ou l'interruption de conducteurs de dépassement de capacité (15 ou 16).

4. Procédé suivant la revendication 2, caractérisé par le fait que le codage est réalisé par l'intermédiaire d'un signal d'entrée pour un multiplexeur (17) du compteur d'adresses (7 ou 8).

5. Procédé suivant la revendication 1, caractérisé par le fait que les sorties des étages d'attaque, branchés en aval de la mémoire de sortie (6), sont reliées aux éléments fonctionnels des différents cylindres en fonction de la séquence individuelle d'allumage du moteur à combustion interne respectif.

6. Procédé suivant la revendication 1, caractérisé par le fait que le microcontrôleur (1) peut interrompre le fonctionnement en parallèle activé lors de la phase de démarrage.

7. Application d'un circuit électrique pour la mise en œuvre du procédé suivant la revendication 1 pour la commande d'étages d'attaque pour des fonctions de moteurs à combustion interne de véhicules automobiles, notamment pour l'injection du carburant, le déclenchement de l'allumage ou analogue, commandé de façon sélective pour chaque cylindre, incluant un microcontrôleur possédant au moins deux sorties commandées par une horloge, et dans lequel en aval de chaque sortie (2 ou 3) est branché un compteur d'adresses (7 ou 8), et une mémoire de sortie (6) est branchée en aval des compteurs d'adresses (7 ou 8) et des sorties (2, 2) du microcontrôleur (1), et dans lequel des conducteurs de dépassement de capacité (15 ou 16), qui peuvent être activés de façon sélective, sont prévus entre la mémoire de sortie (6) et des entrées des compteurs d'adresses (7 ou 8).

8. Application d'un circuit électrique suivant la revendication 7, dans lequel des dispositifs de coupure (18 ou 19) sont montés dans les conducteurs de dépassement de capacité (15 ou 16).

9. Application d'un circuit électrique suivant la revendication 8, dans lequel chaque compteur d'adresses (7 ou 8) contient un compteur à 4 bits (10) avec un décodeur 3/8 (11) branché en aval de ce compteur et un multiplexeur quadruple (17) branché en amont du compteur.